# EUROPEAN PATENT APPLICATION

(11) **EP 2 014 446 A1**
(43) Date of publication of application: **14.01.2009**
(21) Application number: 08103009.0
(22) Date of filing: 27.03.2008
(51) Int. Cl.: B29C 59/02, B29D 23/18, F16L 11/11, B29L 23/18, B29C 45/00

(54) **Apparatus for fabricating bellows type hose and fabrication method thereof**

(30) Priority: 13.07.2007 KR 20070070672
(71) Applicant: Samsung Gwangju Electronics Co., Ltd., Gwangju-city (KR)
(72) Inventor: Hwang, Nam-yeon, Gwangju-City (KR); You, Jea-sun, Gwangju-City (KR)
(74) Representative: Domenego, Bertrand

(57) **Abstract**

An apparatus for fabricating a bellows type hose and a fabricating method thereof, which can improve a bellows type hose for use in a vacuum cleaner or the like in quality. The apparatus includes a power generating unit (11), an outer mold (20) having at least one folds-forming gear (21,23,25) disposed to rotate while revolving around a hollow-cylindrical basic material (16) conveyed from an injection molding unit and thus to form folds on the hollow-cylindrical basic material, the at least one folds-forming gear having a waved folds-forming part formed on an outer circumferential surface thereof, and a power transmitting unit to transmit a power of the power generating unit to the at least one folds-forming gear of the outer mold.

## Description

### CROSS-REFERENCE TO RELATED APPLICATIONS

This application claims the benefit under 35 U.S.C. § 119(a) from Korean Patent Application No. 10-2007-70672, filed on July 13, 2007, in the Korean Intellectual Property Office, the entire content of which is incorporated herein by reference.

### BACKGROUND OF THE INVENTION

### 1. Field of the Invention

The present disclosure relates to an apparatus for fabricating a bellows type hose and a fabrication method thereof. More particularly, the present disclosure relates to an apparatus for fabricating a bellows type hose and a fabrication method thereof, which can improve a bellows type hose for use in a vacuum cleaner or the like in quality.

### 2. Description of the Related Art

Generally, a bellows type hose of synthetic resins or plastics, which guides a transfer of a fluid, is formed in a method of forming a hollow-cylindrical basic material through an injection molding process and then forming waved folds on the hollow-cylindrical basic material by using a mold or the like.

A typical example of apparatus for forming waved folds on the hollow-cylindrical basic material is disclosed as an apparatus for fabricating a waved bellows type hose in Korean utility model No. 1996-4047. The waved bellows type hose-fabricating apparatus is provided with an outer mold having folds-forming grooves in an inner circumferential surface thereof, and an inner mold to supply a fluid of high pressure toward the folds-forming grooves of the outer mold.

An operation of the waved bellows type hose-fabricating apparatus as described above is as follows. First, a hollow-cylindrical basic material formed by an injection molding process is inserted between the outer mold and the inner mold. Subsequently, a fluid is supplied at high pressure onto an inner circumferential surface of the hollow-cylindrical basic material therein through a fluid supplying passage of the inner mold. As a result, a portion of the hollow-cylindrical basic material located on the side of the folds-forming grooves of the outer mold expands and goes up into the folds-forming grooves of the outer mold, so that folds in the form of wave are formed on the hollow-cylindrical basic material.

However, the conventional waved bellows type hose-fabricating apparatus as described above should separate the outer mold from the hollow-cylindrical basic material, move the hollow-cylindrical basic material by a distance corresponding to a length of the outer mold, and then repeat the folds-forming operation as described above, whenever the waved folds are formed on the hollow-cylindrical basic material by the distance corresponding to the length of the outer mold. Accordingly, a problem may occur, in that it is not only difficult and troublesome to form the folds on the hollow-cylindrical basic material, but also a joint, such as a parting line, a step, etc., is formed on the hollow-cylindrical basic material as a plurality of folds-forming processes is independently and successively performed. Also, a problem may occur, in that since the injection molding process for forming the hollow-cylindrical basic material and the folds-forming process are independently preformed from each other, there is a need for a separate inner mold to supply the fluid of high pressure when the waved folds are formed on the hollow-cylindrical basic material.

To address the problems described above, a flexible fabricating apparatus and a fabrication method thereof, which form waved folds on a hollow-cylindrical basic material by moving an outer mold in one direction while an inner mold and the hollow-cylindrical basic material are rotated, are disclosed in Korean patent No. 10-658829. The flexible fabricating apparatus is provided with an inner mold in the form of a screw rod rotated by a rotation chuck and having a waved folds-forming part formed on an outer circumferential surface thereof, an outer mold having an annular forming protrusion formed to engage with the waved folds-forming part of the inner mold and thus to push the hollow-cylindrical basic material to form the waved folds, and means for bring the outer mold to come in contact with the hollow-cylindrical basic material and moving the outer mold away from the hollow-cylindrical basic material.

However, the flexible fabricating apparatus as described above presents a problem that since the outer mold moves in one direction when the apparatus forms the folds on the hollow-cylindrical basic material, the outer mold should not only be returned to the original position after the folds-forming operation, but also the apparatus becomes bigger in order to machine a relatively elongated hollow-cylindrical basic material. Also, a problem, which since the injection molding process for forming the hollow-cylindrical basic material and the folds-forming process are independently preformed from each other like the waved bellows type hose-fabricating apparatus of the Korean utility model No. 1996-4047, there is a need for a separate inner mold to supply the fluid of high pressure when the waved folds are formed on the hollow-cylindrical basic material, is not addressed, but still remained.

### SUMMARY OF THE INVENTION

Exemplary embodiments of the present disclosure address at least the above problems and/or disadvantages and provide at least the advantages described below. Accordingly, an aspect of the present disclosure is to provide an apparatus for fabricating a bellows type hose and a fabrication method thereof, which does not form a joint, such as a parting line, a step, etc., in a folds-forming operation, thereby allowing the bellows type hose to improve in quality.

Another aspect of the present disclosure is to provide an apparatus for fabricating a bellows type hose and a fabrication method thereof, which not only carries out a folds-forming operation with relative ease, but also allows the apparatus to have a simplified structure and reduced bulk.

According to one aspect of an exemplary embodiment of the present disclosure, there is provided an apparatus for fabricating a bellows type hose, including a power generating unit, an outer mold having at least one folds-forming gear disposed to rotate while revolving around a hollow-cylindrical basic material conveyed from an injection molding unit and thus to form folds on the hollow-cylindrical basic material, the at least one folds-forming gear having a waved folds-forming part formed on an outer circumferential surface thereof, and a power transmitting unit to transmit a power of the power generating unit to the at least one folds-forming gear of the outer mold.

Here, the power generating unit comprises a power generating gear connected to a power generating source through a gear train or a belt.

The outer mold may further include a balance supporting part to rotatably support both ends of the at least one folds-forming gear in an equally-spaced circle shape, and a fixed supporting part to support the at least one folds-forming gear and to guide the rotation and the revolution of the at least one folds-forming gear. At this time, preferably, but not necessarily, the balance supporting part is made up of first and second circular rings to rotatably support the both ends of the at least one folds-forming gear, and the fixed supporting part includes a fixed gear fixed on an apparatus body and having inner circumferential teeth formed in an inner circumferential surface thereof to engage with a supporting gear formed on one end of the at least one folds-forming gear.

Preferably, but not necessarily, the waved folds-forming part includes a folds-forming groove formed in a spiral shape with at least one pitch. Also, preferably, but not necessarily, the waved folds-forming part is formed in a length of 10-500 millimeters (mm), more particularly, 100-200 mm.

The power transmitting unit may include a rotation transmitting part having outer circumferential teeth formed on an outer circumferential surface thereof to engage with a power generating gear of the power generating unit and inner circumferential teeth formed on an inner circumferential surface thereof to engage with a driven gear formed on the other end of the at least one folds-forming gear.

In an exemplary embodiment, preferably, but not necessarily, the at least one folds-forming gear includes three folds-forming gears disposed in an equally-spaced circle shape around the hollow-cylindrical basic material.

According to another aspect of an exemplary embodiment of the present disclosure, there is provided a method for fabricating a bellows type hose, including conveying a hollow-cylindrical basic material to at least one folds-forming gear having a waved folds-forming part formed on an outer circumferential surface thereof, and driving the at least one folds-forming gear to allow the at least one folds-forming gear to form folds on the hollow-cylindrical basic material by rotating while revolving around the hollow-cylindrical basic material.

Here, the conveying may include conveying the hollow-cylindrical basic material by an injection molding unit for forming the hollow-cylindrical basic material, to bring the hollow-cylindrical basic material to come in contact with a waved folds-forming part of the at least one folds-forming gear. At this time, preferably, but not necessarily, the at least one folds-forming gear includes three folds-forming gears disposed in an equally-spaced circle shape around the hollow-cylindrical basic material, and the conveying includes conveying the hollow-cylindrical basic material into a center of the three folds-forming gears to bring the hollow-cylindrical basic material into contact with waved folds-forming parts of the three folds-forming gears.

The driving may include driving the at least one folds-forming gear having a folds-forming groove formed in a spiral shape with at least one pitch as the waved folds-forming part, to allow the at least one folds-forming gear to form spiral folds on the hollow-cylindrical basic material. At this time, preferably, but not necessarily, the at least one folds-forming gear includes three folds-forming gears disposed in an equally-spaced circle shape around the hollow-cylindrical basic material, and a fluid is supplied at high pressure into the hollow-cylindrical basic material by an injection molding unit for forming the hollow-cylindrical basic material.

In addition, the driving may include driving the at least one folds-forming gear in such a manner that a pitch forming speed of the spiral folds, which are formed on the hollow-cylindrical basic material by the at least one folds-forming gear, is equal to or different from a conveying speed of the hollow-cylindrical basic material, which is conveyed by an injection molding unit, according to a thickness of the bellows type hose to be finally formed. At this time, preferably, but not necessarily, the driving includes driving the at least one folds-forming gear, so that the pitch forming speed of the spiral folds is slower than the conveying speed of the hollow-cylindrical basic material, when the thickness of the bellows type hose to be finally formed is larger than that of the hollow-cylindrical basic material, and driving the at least one folds-forming gear, so that the pitch forming speed of the spiral folds is faster than the conveying speed of the hollow-cylindrical basic material, when the thickness of the bellows type hose to be finally formed is smaller than that of the hollow-cylindrical basic material.

### BRIEF DESCRIPTION OF THE DRAWINGS

These and/or other aspects and advantages of certain embodiments of the present disclosure will become apparent and more readily appreciated from the following description of the exemplary embodiment, taken in conjunction with the accompanying drawings of which:
FIG. 1 is a perspective view exemplifying an apparatus for fabricating a bellows type hose according to an exemplary embodiment of the present disclosure as diagonally viewed from a front side thereof;
FIG. 2 is a side view of the apparatus of FIG. 1;
FIG. 3 is a front view of the apparatus illustrated in FIG. 1; and
FIG. 4 is a flowchart exemplifying a bellows type hose-forming operation of the apparatus illustrated in FIG. 1.

Throughout the drawings, the same drawing reference numerals will be understood to refer to the same elements, features, and structures.

### DETAILED DESCRIPTION OF THE PREFERRED EMBODIMENTS

Hereinafter, an apparatus for fabricating a bellows type hose and a fabrication method thereof according to an exemplary embodiment of the present disclosure will now be described in greater detail with reference to the accompanying drawings.

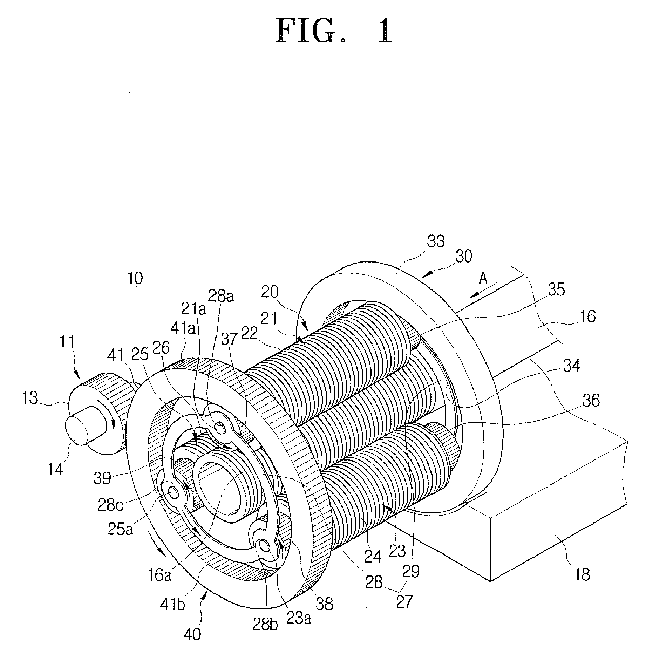

FIGS. 1 through 3 are views exemplifying a bellows type hose-fabricating apparatus 10 according to an exemplary embodiment of the present disclosure.

As illustrated in FIG. 1, the bellows type hose-fabricating apparatus 10 according to the exemplary embodiment of the present disclosure includes a power generating unit 11, an outer mold 20, and a power transmitting unit 40.

The power generating unit 11 is made up of a power generating gear 13 connected to a power generating source (not illustrated) through a gear train (not illustrated). The power generating gear 13 may be connected to the power generating source through a belt apparatus including a driving pulley (not illustrated) formed on a driving axis of the power generating source, a driven pulley (not illustrated) formed on an axis 14 of the power generating gear 13 and a belt connecting the driving pulley and the driven pulley, instead of the gear train.

The outer mold 20, which forms spiral folds 16a on a hollow-cylindrical basic material 16 of synthetic resin formed and conveyed by an injection molding unit (not illustrated), is provided with at least one, for example, three folds-forming gears 21, 23 and 25. Here, since a construction of the injection molding unit is the same as that of the conventional one, which continuously forms the hollow-cylindrical basic material 16 by injecting a molten synthetic resin onto a cylindrical jig (not illustrated) by using a fluid of high pressure supplied through a fluid supplying passage (not illustrated), a detailed description thereof will be omitted. As used herein the term "high pressure" shall mean pressure of 2-5kg/cm2.

Each of the folds-forming gears 21, 23 and 25 has a waved folds-forming part 22, 24 or 26 formed on an outer circumferential surface thereof to rotate while coming in contact with the hollow-cylindrical basic material 16 to form spiral folds 16a on the hollow-cylindrical basic material 16. To form the spiral folds 16a on the hollow-cylindrical basic material 16, the waved folds-forming part 22, 24 or 26 is preferably made up of a folds-forming groove formed in a spiral shape with at least one pitch. Also, to form the folds on the hollow-cylindrical basic material 16 formed and conveyed by the injection molding unit in a state where it is completely not hardened, the waved folds-forming part 22, 24 or 26 is formed to have a length of 10 - 500mm, more particularly, 100-200mm in a direction of conveying the hollow-cylindrical basic material 16.

The three folds-forming gears 21, 23 and 25 are disposed so that they can rotate while revolving around the hollow-cylindrical basic material 16. For this, first and second ends 21 a, 23a and 25a (only the first end illustrated) are rotatably supported in an equally-spaced circle shape by a balance supporting part 27 inside a rotation transmitting gear 41 of the power transmitting unit 40 and a fixed gear 33 of a fixed supporting 30, which will be described. The balance supporting part 27 is provided with first and second circular rings 28 and 29, which rotatably support the first and the second ends 21 a, 23a and 25a of the folds-forming gears 21, 23 and 25 in a circle shape spaced, for example, in an equal angle of 120 degrees. On the first and the second circular rings 28 and 29 are formed three first and second supporting holes 28a, 28b and 28c (only the first supporting holes illustrated), which rotatably support the first and the second ends 21 a, 23a and 25a of the folds-forming gears 21, 23 and 25, respectively.

To support and guide the second ends of the folds-forming gears 21, 23 and 25 rotatably supported by the second circular ring 29 to allow them to stably rotate and revolve in a folds-forming operation, a fixed supporting part 30 is disposed on the side of the second ends of the folds-forming gears 21, 23 and 25. The fixed supporting part 30 is made up of a fixed gear 33, a lower part of which is fixed on an apparatus body 18. The fixed gear 33 has inner circumferential teeth 34 formed on an inner circumferential surface thereof to engage with supporting gears 35 and 36 (only two supporting gears among the three supporting gears illustrated) formed on the second ends of the folds-forming gears 21, 23 and 25.

The power transmitting unit 40, which transmits a power transmitted from the power generating gear 13 of the power generating unit 11 to the folds-forming gears 21, 23 and 25 of the outer mold 20, is provided with a rotation transmitting gear 41. The rotation transmitting gear 41 has outer circumferential teeth 41 a formed on an outer circumferential surface thereof to engage with the power generating gear 14, and a inner circumferential teeth 41 b formed on an inner circumferential surface thereof to engage with driven gears 37, 38 and 39 formed on the side of the first ends 21 a, 23a and 25a of the folds-forming gears 21, 23 and 25.

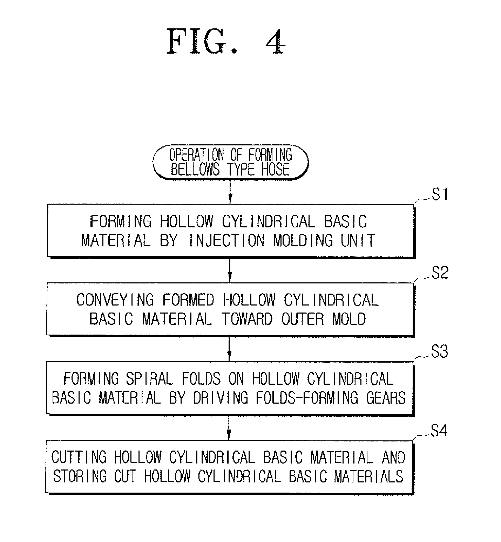

Hereinafter, an operation of the bellows type hose fabricating apparatus 10 constructed as described above will be described with reference to FIGS. 1 through 4.

First, a hollow-cylindrical basic material 16 is continuously formed by an injection molding unit, which is not illustrated (S1).

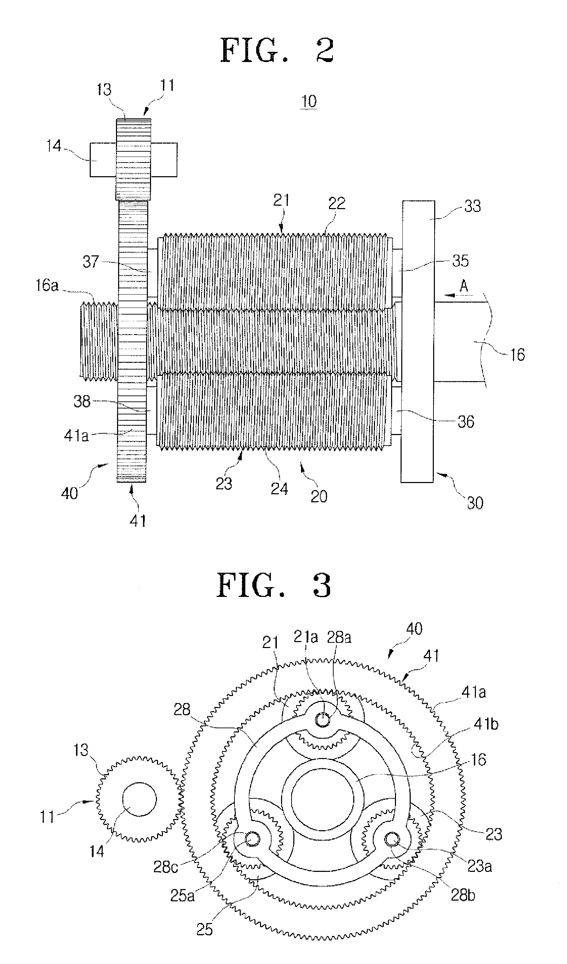

Subsequently, the formed hollow-cylindrical basic material 16 is conveyed in a direction of arrow A of FIGS. 1 and 2 toward the folds-forming gears 21, 23 and 25 of the outer mold 20 (S2).

At this time, a power generated from the power generating source, such as a motor, is transmitted to the power generating gear 13 through the gear train, so that it rotates the power generating gear 13 in one direction, for example, a clockwise direction of FIG. 1. As the power generating gear 13 is rotated in the clockwise direction, the rotation transmitting gear 41 having the outer circumferential teeth 41 a engaged with the power generating gear 13 is rotated in a counterclockwise direction. As a result, the three folds-forming gears 21, 23 and 25 engaged with the inner circumferential teeth 41 b of the rotation transmitting gear 41 is begin to rotate while revolving in the counterclockwise direction by a rotating force of the rotation transmitting gear 41.

Under this state, when the front end of the hollow-cylindrical basic material 16 reaches the folds-forming gears 21, 23 and 25 of the outer mold 20, it advances into a center of the three folds-forming gears 21, 23 and 25 rotatably supported in the circular shape spaced in the equal angle of 120 degrees by the first and the second circular rings 28 and 29.

When the front end of the hollow-cylindrical basic material 16 advances into the center of the three folds-forming gears 21, 23 and 25, the three folds-forming gears 21, 23 and 25 rotates and revolves about the hollow-cylindrical basic material 16. Thus, the folds-forming grooves in the spiral shape of the waved folds-forming parts 22, 24 and 26 are rotated while coming in contact with the hollow-cylindrical basic material 16 to form spiral folds 16a on the outer circumferential surface of the hollow-cylindrical basic material 16 (S3).

At this time, a fluid is supplied at high pressure onto an inner circumferential surface of the hollow-cylindrical basic material 16 through a fluid supplying passage of the injection molding unit. As a result, a portion of the hollow-cylindrical basic material 16 located on the side of the folds-forming grooves in the form of spiral shape of the waved folds-forming parts 22, 24 and 26 expands and goes up into the folds-forming grooves, so that spiral folds are formed on the hollow-cylindrical basic material 16.

In addition, at this time, the folds-forming gears 21, 23 and 25 are driven, so that according to a thickness of the bellows type hose to be finally formed, a pitch forming speed of the spiral folds 16a, which are formed on the hollow-cylindrical basic material 16 by the folds-forming gears 21, 23 and 25, is equal to or different from a conveying speed of the hollow-cylindrical basic material 16, which is conveyed by the injection molding unit. That is, a driving speed of the power generating source 11, such as the motor, and a gear ratio of the power generating gear 13, the rotation transmitting gear 41 and the folds-forming gear 21, 23 and 25 are set, so that when the thickness of the bellows type hose to be finally formed is larger than that of the hollow-cylindrical basic material 16, the pitch forming speed of the spiral folds 16a is slower than the conveying speed of the hollow-cylindrical basic material 16. Also, the driving speed of the power generating source and the gear ratio of the power generating gear 13, the rotation transmitting gear 41 and the folds-forming gear 21, 23 and 25 are set, so that when the thickness of the bellows type hose to be finally formed is smaller than that of the hollow-cylindrical basic material 16, the pitch forming speed of the spiral folds 16a is faster than the conveying speed of the hollow-cylindrical basic material 16.

When the hollow-cylindrical basic material 16 completely passes through the waved folds-forming parts 22, 24 and 26 of the folds-forming gear 21, 23 and 25 in the manner as described above, the operation of forming the spiral folds 16a on the hollow-cylindrical basic material 16 is finished.

After that, the hollow-cylindrical basic material 16 on which the spiral folds 16a are formed, that is, the finally formed bellows type hose is cooled, cut in a proper size and then stored (S4).

As apparent from the foregoing description, according to the exemplary embodiment of the present disclosure, the bellows type hose-fabricating apparatus and the fabrication method thereof continuously form the spiral folds on the hollow-cylindrical basic material with the folds-forming groove in the form of spiral shape of the waved folds-forming part rotating according to the rotation of the folds-forming gears in the folds-forming operation. Accordingly, the problem that the joint, such as the parting line, the step, etc., is formed on the hollow-cylindrical basic material due to the folds-forming process independently or non-continuously performed as in the conventional bellows type hose-fabricating apparatus, is prevented, thereby allowing the bellows type hose to improve in quality.

Further, the bellows type hose-fabricating apparatus and the fabrication method thereof according to the exemplary embodiment of the present disclosure form the folds on the hollow-cylindrical basic material by the folds-forming gears of the outer mold rotating while revolving around the hollow-cylindrical basic material in the state where the hollow-cylindrical basic material is conveyed. Accordingly, there is no need for the outer mold to return to the original position after the folds-forming operation as in the conventional flexible tube-fabricating apparatus, and it is possible to machine a relatively elongated hollow-cylindrical basic material even though the apparatus does not become bigger.

Also, the bellows type hose-fabricating apparatus and the fabrication method thereof according to an exemplary embodiment of the present disclosure performs the injection molding process for forming the hollow-cylindrical basic material and the folds-forming process in succession. Accordingly, there is no need for a separate inner mold for supplying a fluid at high pressure into the hollow-cylindrical basic material when the waved folds are formed on the hollow-cylindrical basic material, thereby allowing the apparatus to reduce fabrication costs for the bellows type hose.

Although representative embodiment of the present disclosure has been shown and described in order to exemplify the principle of the present disclosure, the present disclosure is not limited to the specific embodiment. It will be understood that various modifications and changes can be made by one skilled in the art without departing from the spirit and scope of the invention as defined by the appended claims. Therefore, it shall be considered that such modifications, changes and equivalents thereof are all included within the scope of the present disclosure.

## Claims

1. An apparatus for fabricating a bellows type hose from a hollow-cylindrical basic material, the apparatus comprising:
a power generating unit;
an outer mold having at least one folds-forming gear disposed to rotate while revolving around the hollow-cylindrical basic material and thus to form folds on the hollow-cylindrical basic material, the at least one folds-forming gear having a waved folds-forming part formed on an outer circumferential surface thereof; and
a power transmitting unit to transmit a power of the power generating unit to the at least one folds-forming gear of the outer mold.

2. The apparatus as claimed in claim 1, wherein the power generating unit comprises a power generating gear connected to a power generating source through a gear train or a belt.

3. The apparatus as claimed in claim 1 or 2, wherein the outer mold further comprises:
a balance supporting part to rotatably support both ends of the at least one folds-forming gear in an equally-spaced circle shape; and
a fixed supporting part to support the at least one folds-forming gear and to guide the rotation and the revolution of the at least one folds-forming gear.

4. The apparatus as claimed in claim 3, wherein the balance supporting part comprises first and second circular rings to rotatably support the both ends of the at least one folds-forming gear.

5. The apparatus as claimed in claim 3 or 4, wherein the fixed supporting part comprises a fixed gear fixed on an apparatus body and having inner circumferential teeth formed in an inner circumferential surface thereof to engage with a supporting gear formed on one end of the at least one folds-forming gear.

6. The apparatus as claimed in any of claims 2 to 5, wherein the waved folds-forming part comprises a folds-forming groove formed in a spiral shape with at least one pitch.

7. The apparatus as claimed in claim 6, wherein the waved folds-forming part is formed in a length of 10-500 mm.

8. The apparatus as claimed in any of claims 1 to 7, wherein the power transmitting unit comprises a rotation transmitting part having outer circumferential teeth formed on an outer circumferential surface thereof to engage with a power generating gear of the power generating unit and inner circumferential teeth formed on an inner circumferential surface thereof to engage with a driven gear formed on the other end of the at least one folds-forming gear.

9. The apparatus as claimed in any of claims 1 to 8, wherein the at least one folds-forming gear comprises three folds-forming gears disposed in an equally-spaced circle shape around the hollow-cylindrical basic material.

10. A method for fabricating a bellows type hose, comprising:
conveying a hollow-cylindrical basic material to at least one folds-forming gear having a waved folds-forming part formed on an outer circumferential surface thereof; and
driving the at least one folds-forming gear to allow the at least one folds-forming gear to form folds on the hollow-cylindrical basic material by rotating while revolving around the hollow-cylindrical basic material.

11. The method as claimed in claim 10, wherein the conveying comprises conveying the hollow-cylindrical basic material from an injection molding unit for forming the hollow-cylindrical basic material, to bring the hollow-cylindrical basic material into contact with the waved folds-forming part.

12. The method as claimed in any of claims 10 and 11, wherein the at least one folds-forming gear comprises three folds-forming gears disposed in an equally-spaced circle shape around the hollow-cylindrical basic material, and wherein the conveying comprises conveying the hollow-cylindrical basic material into a center of the three folds-forming gears to bring the hollow-cylindrical basic material into contact with waved folds-forming parts of the three folds-forming gears.

13. The method as claimed in any of claims 10 to 12, wherein the driving comprises driving the at least one folds-forming gear having a folds-forming groove formed in a spiral shape with at least one pitch as the waved folds-forming part, to allow the at least one folds-forming gear to form spiral folds on the hollow-cylindrical basic material.

14. The method as claimed in any of claims 10 to 13, wherein the at least one folds-forming gear comprises three folds-forming gears disposed in an equally-spaced circle shape around the hollow-cylindrical basic material.

15. The method as claimed in any of claims 10 to 14, wherein a fluid is supplied at high pressure into the hollow-cylindrical basic material by an injection molding unit for forming the hollow-cylindrical basic material.

16. The method as claimed in any of claims 10 to 15, wherein the driving comprises driving the at least one folds-forming gear in such a manner that a pitch forming speed of the spiral folds, which are formed on the hollow-cylindrical basic material by the at least one folds-forming gear, is equal to or different from a conveying speed of the hollow-cylindrical basic material, which is conveyed by an injection molding unit, according to a thickness of the bellows type hose to be finally formed.

17. The method as claimed in any of claims 10 to 16, wherein the driving comprises driving the at least one folds-forming gear, so that the pitch forming speed of the spiral folds is slower than the conveying speed of the hollow-cylindrical basic material, when the thickness of the bellows type hose to be finally formed is larger than that of the hollow-cylindrical basic material, and driving the at least one folds-forming gear, so that the pitch forming speed of the spiral folds is faster than the conveying speed of the hollow-cylindrical basic material, when the thickness of the bellows type hose to be finally formed is smaller than that of the hollow-cylindrical basic material.
